# EUROPEAN PATENT SPECIFICATION

(11) **EP 3 386 793 B1**
(45) Date of publication and mention of the grant of the patent: **13.11.2019**
(21) Application number: 16791470.4
(22) Date of filing: 05.10.2016
(51) Int. Cl.: B60K 15/077, B60K 15/03, B60K 15/04, B60K 15/06

(54) **VEHICLE FUEL TANK**
FAHRZEUGKRAFTSTOFFTANK
RÉSERVOIR DE CARBURANT DE VÉHICULE

(30) Priority: 08.12.2015 TR 201515666
(43) Date of publication of application: 17.10.2018
(73) Proprietor: TURK TRAKTOR VE ZIRAAT MAKINALARI ANONIM, 06560 Ankara (TR)
(72) Inventor: AVDAN, Mustafa, 06560 Ankara (TR); CENGIZ, Cagan, 06560 Ankara (TR); BAS, Oktay, 06560 Ankara (TR)
(74) Representative: Kayahan, Senem
(86) International application number: PCT/TR2016/050368
(87) International publication number: WO 2017/099683

(56) References cited:
- DE-A1- 4 227 120
- US-A1- 2006 086 389
- US-A1- 2008 302 805
- US-A1- 2014 366 963

## Description

### TECHNICAL FlELD

The invention is related to a vehicle fuel tank which provides ex-factory economic fuel delivery and continuous suction even in sloping land.

### KNOWN STATE OF THE ART

After mass production vehicles exit out of the production line, they are filled with fuel in order to be used when necessary during transportation. The average fuel that is required to be filled in order for suction from the tank to be carried out during transportation and the metering of sufficient fuel level by means of the float in the present system is between 10lt to 45lt and this amount is higher than that is required. This increases the production cost in mass production factories. Additionally in rough terrain, fuel moves inside the tank due to gravity. When the fuel amount decreases the suction from the bottom of the tank, cannot be performed due to the position of the tractor on inclined ground. In sloping land, the suction pipe nozzles cannot be fed by fuel and as the pump cannot carry out suction, the vehicle cannot be operated.

The patent application numbered US 5263458 is related to a similar issue. Said patent application is related to the provision of fuel from an auxiliary tank which is located inside the fuel tank in motor vehicles. Fuel is transferred from the auxiliary tank to the engine in situations where the vehicles accelerates or decelerates in sloping land.

The patent application numbered US 8220654 is related to a similar issue. In said patent application the provision of fuel inside a reservoir located in the fuel tank in cases of the operation of a vehicle in sloping land is

Another fuel tank is known from US 2008/302805 A1.

### BRI EF DESCRI PTI ON OF THE I NVENTION

The present invention is related a vehicle fuel tank which can perform continuous suction even in sloping land in order to provide new advantages to the related technical field and to eliminate the disadvantages that have been described above.

The object of the invention is to supply the vehicle with fuel by means of the fuel pump continuously when the fuel is insufficient in highly sloping land conditions.

Another object of the invention is to provide a sufficient amount of fuel delivery to tractors that shall be delivered to the customers from the factory.

The present invention is related to a fuel tank having a float which determines the amount of fuel located inside the reservoir and a filling place provided to allow fuel access into the reservoir.

In order to provide fuel suction continuously from the fuel tank, said vehicle fuel tank further comprises:
- A small reservoir separated inside the reservoir with a partition wall which extends at a vertical direction, sufficiently perpendicular to the base of the fuel tank,
- A large reservoir having a larger volume relative to the small reservoir such that it is neighbouring the small reservoir located inside the fuel tank,
- A first suction pipe extending into the large reservoir,
- A second suction pipe extending into the small reservoir,
- And an electro valve which determines the suction pipe which needs to carry out suction in accordance with the fuel amount information received from the float, wherein the first suction pipe and the second suction pipe are connected to each other.

According to a preferred embodiment of the invention, the filling place is located on the small reservoir. The fuel that is filled inside the fuel tank, thereby is first of all transferred into the small reservoir.

According to another preferred embodiment of the invention, the first and the second suction pipes are long enough to touch the base of the fuel tank.

According to another preferred embodiment of the invention the small reservoir comprises a fixing slot at the base thereof, into which the second suction pipe is placed. By this means the position of the second suction pipe is maintained at the base of the small reservoir.

According to another preferred embodiment of the invention, the height of the partition wall is shorter than the side wall of the fuel tank. By this means when the small reservoir is full, the fuel continues to fill up the large reservoir.

### BRIEF DESCRIPTION OF THE FlGURES

Figure1 shows the section view of the side surface of the fuel tank.

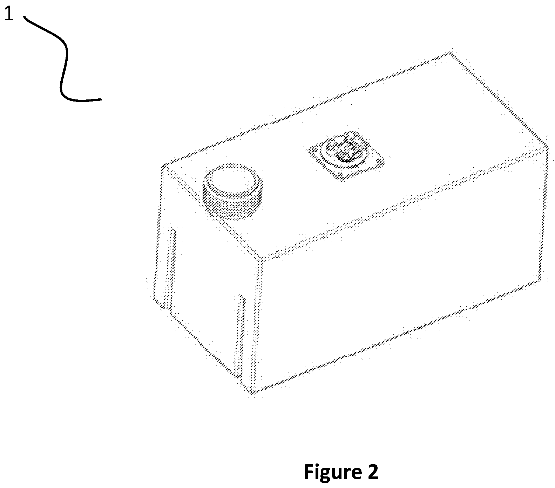

Figure2 shows the isometric view of the fuel tank.
Figure 3 shows the schematic view of the system.

### REFERENCE NUMBERS

1 Fuel tank
2 Small reservoir
   2.1.2. Suction Pipe
   2.2 Fixing Slot
   2.3 Partition Wall
3 Large reservoir
   3.1.1. Suction Pipe
4 Filling area
5 Float
6 Electro valve
7 Fuel pipe
8 Warning Indicator

### DETAILED DESCRIPTION OF THE INVENTION

In the detailed description the novelty invention is described by means of examples that do not limit the invention but are intended to further describe the invention. Accordingly, a vehicle fuel tank (1) which provides continuous suction even in sloping land and ex-factory economic fuel delivery and the structural aspects that form the fuel tank (1) is described.

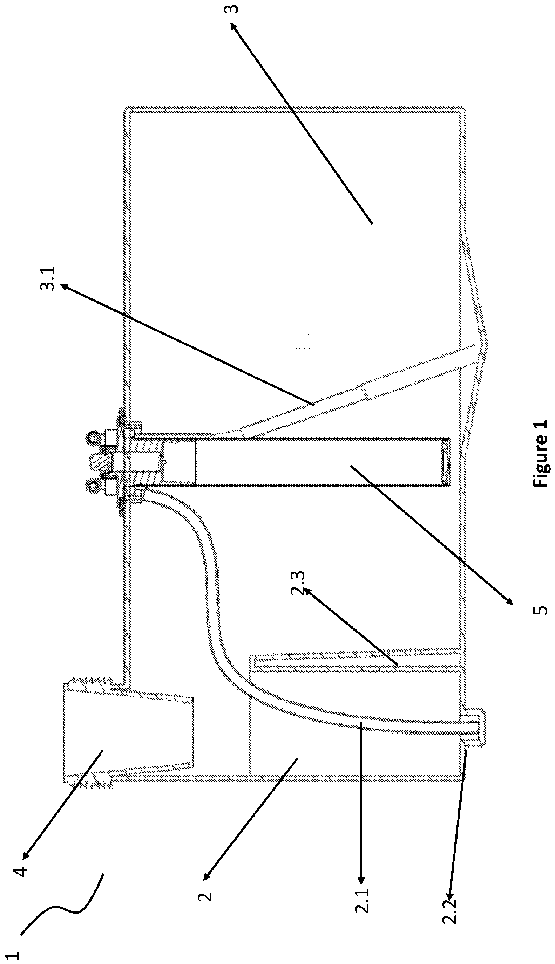

Figure1 shows the section view of the side surface of the fuel tank (1).The vehicle fuel tank (1) is basically formed of an interlocking small reservoir (2) and a large reservoir (3). The small reservoir (2) is separated inside the large reservoir (3) by means of a partition wall (2.3). The partition wall (2.3) extends at a perpendicular direction which is sufficiently vertical from the base of the fuel tank, and the height of the partition wall (2.2) is shorter than the side wall of the fuel tank (1). A fixing slot (2.2) is provided in the base section of the small reservoir(2). A 2nd suction pipe (2.1) has been provided which is connected to the electro valve (6) that has been extended to the base of the small reservoir (2) 2. The end of the suction pipe (2.1) is placed inside the fixing slot (2.2) that has been provided on the base. A 1st suction pipe (3.1) has been provided which enables transfer to the fuel tank and is connected as an output to the electro valve (6)that has been extended to the base of the large reservoir (3). A filling place (4) has been provided on the fuel tank (1). The filling place (4) has been provided such that it is located on the top section of the small reservoir (2). Therefore it is enabled for the fuel to be directly filled into the small reservoir (2). The invention comprises a float (5) located in the large reservoir (3) in order to measure the fuel level, and an electro valve (6) which determines if the fuel suction direction is to be carried out from the 1st suction pipe (3.1) or the 2nd suction pipe (2.1) according to the signal received from the float (5).

As the filling place (4) of the fuel tank is located on the top section of the small reservoir (2) suc that it shall directly fill the small reservoir (2), fuel always fills the small reservoir first (2) during each fuel intakeand then it overflows out of the small reservoir and continues to fill the large reservoir (3). The electro valve (6) will determine of the suction direction will ve carried out from the small reservoir (2) or the large reservoir (3) according to the signal received from the float (5). When the signal indicating that the tank is empty is received from the float (5), the electro valve, shall move the electronic spool located inside the electro valve and the 1st suction pipe is shut off and flow is carried out from the 2nd suction pipe. In other words the electro valve (6) enables suction from the small reservior (2), after the suction pipe of the large reservoir (3) is shut off. As a result air cannot be filled into the large reservoir (3). As soon as suction starts from the small reservoir (2) a signal is given to define that the small reservoir (2) is being usedon the indicator.

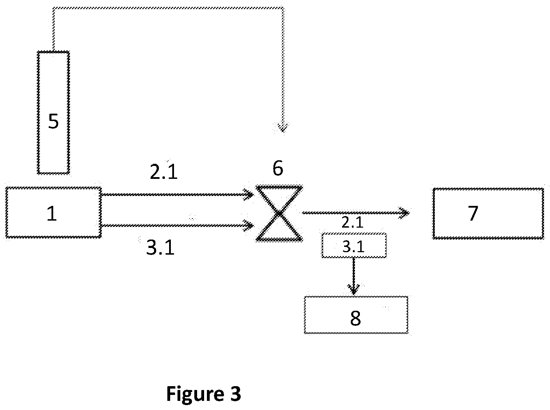

Figure 3 shows the schematic view of the system. A signal is received from the float (5) located inside the large reservoir (3) which measures the fuel level, and submits information that the large reservoir (3) is empty. The signal received from float (5) is submitted to the electro valve (6). The electronic spool located inside the electro valve (6) is moved according to the signal that has been received. The spool shuts off the 1st suction pipe (3.1) located on the large reservoir (3). The fuel flows from the 2nd suction pipe (2.1) located inside the small reservoir (2).

The invention comprises all aspects such as the mounting and design of the floats (5) and the suction pipes (2.1., 3.1) of the tanks placed inside the large reservoir (3) to be as close as possible to the base of the reservoir. Transportation of the vehicles ex-factory can be carried out by filling only the small reservoir (2) with fuel. The invention can be applied to all tanks having any geometrical shape, as long as one tank is smaller than the other.

The advantages of the invention is that; it can carry out suction from two sections of the small reservoir (2) and the large reservoir (3); at the end of the production line the vehicle is supplied with fuel at a volume equal to the volume of the small reservoir, and as a result the production costs are reduced; during fuel delivery, the fuel is first filled into the small reservoir (2) and therefore the vehicle can operate even on rough terrain with small amount of fuel usage. Another advantage is that when the fuel shakes inside the tank (1) on steep, rough terrain, inclines and dented roads the suction of fuel will be carried out from the small reservoir (2) where the fuel level is high and as a result the suction is continuous and the vehicle is prevented from stopping. Even if the indicator, connected to the float (5) indicates that the fuel inside the large reservoir has finished, the suction shall be carried out from the small reservoir (2) by means of the electro valve (6) to which the suction pips are connected (2.1,3.1) and the advantage is that the vehicle shall continue to operate and function until the fuel inside the small reservoir (2) is consumed.

## Claims

1. A fuel tank (1) comprising a filling place (4) which is provided to allow fuel access into the reservoir, and a float (5) which enables to measure the fuel amount inside the reservoir, and comprising the following in order to provide fuel suction continuously from inside the fuel tank (1):
• A small reservoir (2) separated inside the reservoir with a partition wall (2.3) which extends at a vertical direction, sufficiently perpendicular to the base of the fuel tank (1),
• A large reservoir (3) having a larger volume relative to the small reservoir (2) such that it is neighbouring the small reservoir located inside the fuel tank (1),
• A first suction pipe (3.1) extending into the large reservoir (3), and
• A second suction pipe (2.1) extending into the small reservoir (2),
the fuel tank being **characterized by** further comprising:
• an electro valve (6) which determines the suction pipe (2.1, 3.1) which needs to carry out suction in accordance with the fuel amount information received from the float(5), wherein the first suction pipe (3.1) and the second suction pipe (2.1) are connected to each other.

2. A fuel tank (1) according to claim 1, **characterized in that** the filling place (4) is located on the small reservoir (2).

3. A fuel tank (1) according to claim 2, **characterized in that** the first and the second suction pipes (3.1,2.1) are long enough to touch the base of the fuel tank (1).

4. A fuel tank (1) according to claim 3, **characterized in that** the small reservoir (2) comprises a fixing slot (2.2) at the base thereof, into which the second suction pipe (2.1) is placed.

5. A fuel tank (1) according to claim 4, **characterized in that** the height of the partition wall (2.3) is shorter than the height of the side wall of the fuel tank (1).

6. An operation method of a vehicle fuel tank (1) according to claim 1, providing ex-factory economic fuel delivery and continuous suction even in sloping land and comprising the following steps:
• A signal is received from the float (5) located inside the large reservoir (3) which measures the fuel level, and submits information that the large reservoir (3) is empty,
• The signal received from float (5) is submitted to the electro valve (6),
• A spool located inside the electro valve (6) is moved according to the contents of the signal that has been received,
• If the large reservoir (3) is empty the spool shuts off the first suction pipe (3.1),
• And the fuel flows from the 2nd suction pipe (2.1) located inside the small reservoir (2).

## Patentansprüche

1. Kraftstofftank (1) mit einer Einfüllstelle (4), die vorgesehen ist, um den Zugang zum Kraftstoff zu ermöglichen, in den Behälter und einen Schwimmer (5), der es ermöglicht, die Kraftstoffmenge im Inneren zu messen, das Reservoir und umfassend das Folgende, um eine kontinuierliche Kraftstoffansaugung aus dem Inneren des Kraftstofftanks (1) zu gewährleisten,
• Kleiner Behälter (2), der innerhalb des Behälters mit einer Trennwand (2.3) getrennt ist, die sich in vertikaler Richtung erstreckt, ausreichend senkrecht zur Basis des Kraftstofftanks (1),
• Ein großer Behälter (3) mit einem größeren Volumen im Verhältnis zu dem kleinen Behälter (2), so dass er dem kleinen Behälter benachbart ist, der sich innerhalb des Kraftstofftanks (1) befindet,
• Eine erste Saugleitung (3.1), die sich in den großen Behälter (3) erstreckt, und
• Ein zweites Saugleitung (2.1), das sich in den kleinen Behälter (2) erstreckt, der Kraftstofftank **dadurch gekennzeichnet ist, dass** er ferner umfasst:
• Ein Elektroventil (6), das die Saugleitung (2.1, 3.1) bestimmt, die gemäß den vom Schwimmer (5) empfangenen Kraftstoffmengeninformationen saugen muss, wobei die erste Saugleitung (3.1) und die zweite Saugleitung (2.1) miteinander verbunden sind.

2. Kraftstofftank (1) nach Anspruch 1, **dadurch gekennzeichnet, dass** die Einfüllstelle (4) auf dem kleinen Behälter (2) angeordnet ist.

3. Kraftstofftank (1) nach Anspruch 2, **dadurch gekennzeichnet, dass** die erste und die zweite Saugleitung (3.1,2.1) lang genug sind, um den Boden des Kraftstofftanks (1) zu berühren.

4. Kraftstofftank (1) nach Anspruch 3, **dadurch gekennzeichnet, dass** der kleine Behälter (2) einen Befestigungsschlitz (2.2) an seiner Basis aufweist, in den das zweite Saugleitung (2.1) eingelassen ist wird platziert.

5. Kraftstofftank (1) nach Anspruch 4, **dadurch gekennzeichnet, dass** die Höhe der Trennwand (2.3) kleiner ist als die Höhe der Seitenwand des Kraftstofftanks (1).

6. Betriebsverfahren eines Fahrzeug-Kraftstofftanks (1) nach Anspruch 1, das ab Werk eine wirtschaftliche Kraftstoffzufuhr und kontinuierliches Saugen auch in Hanglagen ermöglicht und die folgenden Schritte umfasst:
• Ein Signal wird von dem Schwimmer (5) empfangen, der sich innerhalb des großen Behälters (3) befindet, der den Kraftstoffstand misst und die Information übermittelt, dass der große Behälter (3) leer ist,
• Das vom Schwimmer (5) empfangene Signal wird an das Elektroventil (6) weitergeleitet.,
• Eine Spule, die sich im Inneren des Elektroventils (6) befindet, wird entsprechend dem Inhalt des empfangenen Signals bewegt,
• Wenn der große Behälter (3) leer ist, schließt der Kolben die erste Saugleitung (3.1),
• Und der Kraftstoff strömt aus dem 2te Saugleitung (2.1), das sich im Inneren des kleinen Behälters (2) befindet.

## Revendications

1. Réservoir de carburant (1) comprenant une place de remplissage (4) qui est prévu pour permettre l'accès du carburant dans le réservoir, et un flotteur (5) qui permet de mesurer la quantité de carburant à l'intérieur du réservoir, et comprenant les éléments suivants afin de fournir une aspiration de carburant en continu depuis l'intérieur du réservoir de carburant (1) :
• Un petit réservoir (2) séparé à l'intérieur du réservoir par une paroi de séparation (2.3) qui s'étend verticalement, suffisamment perpendiculairement à la base du réservoir de carburant (1),
• Un grand réservoir (3) ayant un volume plus grand que le petit réservoir (2) de sorte qu'il est voisin du petit réservoir situé à l'intérieur du réservoir de carburant (1),
• Un premier tuyau d'aspiration (3.1) s'étendant dans le grand réservoir (3), et
• Un deuxième tuyau d'aspiration (2.1) s'étendant dans le petit réservoir (2), le réservoir de carburant étant **caractérisé en ce qu'**il comprend en outre :
• Une électrovanne (6) qui détermine le tuyau d'aspiration (2.1, 3.1) qui doit effectuer l'aspiration en fonction des informations de quantité de carburant reçues du flotteur (5), dans laquelle le premier tuyau d'aspiration (3.1) et le deuxième tuyau d'aspiration (2.1) sont reliés entre eux.

2. Réservoir de carburant (1) selon la revendication 1, **caractérisé en ce que** la place de remplissage (4) est située sur le petit réservoir (2).

3. Réservoir de carburant (1) selon la revendication 2, **caractérisé en ce que** les première et deuxième tuyaux d'aspiration (3.1, 2.1) sont suffisamment longues pour toucher le fond du réservoir de carburant (1).

4. Réservoir de carburant (1) selon la revendication 3, **caractérisé en ce que** le petit réservoir (2) comprend une fente de fixation (2.2) à sa base, dans laquelle le deuxième tuyau d'aspiration (2.1) est placé.

5. Réservoir de carburant (1) selon la revendication 4, **caractérisé en ce que** la hauteur de la paroi de séparation (2.3) est inférieure à la hauteur de la paroi latérale du réservoir de carburant (1).

6. Procédé de fonctionnement d'un réservoir de carburant (1) de véhicule selon la revendication 1, permettant une alimentation en carburant économique en sortie d'usine et une aspiration continue, même sur les terrains en pente, et comprenant les étapes suivantes :
• Un signal est reçu du flotteur (5) situé à l'intérieur du grand réservoir (3) qui mesure le niveau de carburant, et envoie une information indiquant que le grand réservoir (3) est vide,
• Le signal reçu du flotteur (5) est soumis à l'électrovanne (6),
• Une bobine située à l'intérieur de l'électrovanne (6) est déplacée en fonction du contenu du signal reçu,
• Si le grand réservoir (3) est vide, la bobine ferme le premier tuyau d'aspiration (3.1),
• Et le carburant s'écoule du 2ème tuyau d'aspiration (2.1) située à l'intérieur du petit réservoir (2).
